Europäisches Patentamt

European Patent Office

Office européen des brevets

(19)

(11) Veröffentlichungsnummer : **0 057 778**
**B1**

(12) # EUROPÄISCHE PATENTSCHRIFT

(45) Veröffentlichungstag der Patentschrift :
26.09.84

(21) Anmeldenummer : 81201369.6

(22) Anmeldetag : 15.12.81

(51) Int. Cl.³ : **H 02 K 49/10**, H 02 K 49/04,
B 61 H 7/08

(54) Schaltbare, dauermagnetische Bremse mit Polstücken wechselnder Polarität, an denen feststehende und verdrehbare Dauermagnete angrenzen.

(30) Priorität : 10.02.81 CH 876/81

(43) Veröffentlichungstag der Anmeldung :
18.08.82 Patentblatt 82/33

(45) Bekanntmachung des Hinweises auf die Patenterteilung : 26.09.84 Patentblatt 84/39

(84) Benannte Vertragsstaaten :
AT BE CH DE FR GB IT LI NL SE

(56) Entgegenhaltungen :
BE-A- 884 576
DE-A- 2 638 133
FR-A- 2 295 619

(73) Patentinhaber : **Werkzeugmaschinenfabrik Oerlikon-Bührle AG**
**Birchstrasse 155**
**CH-8050 Zürich (CH)**

(72) Erfinder : **Leutwyler, Robert**
**Regensbergstrasse**
**CH-8113 Boppelsen (CH)**
Erfinder : **Mueller, Walter**
**Rebenweg 10**
**CH-8303 Bassersdorf (CH)**

EP 0 057 778 B1

## Beschreibung

Diese Erfindung bezieht sich auf eine schaltbare, dauermagnetische Bremse mit Polstücken wechselnder Polarität, an denen feststehende und verdrehbare Dauermagnete angrenzen, wobei die feststehenden Dauermagnete an den Polstücken anliegen und die verdrehbaren Dauermagnete mit segmentförmigen Polschuben versehen sind, welche in entsprechende Aussparungen der Polstücke eingreifen.

Derartige Bremsen finden Verwendung bei Schienenfahrzeugen wie auch bei Kraftfahrzeugen als Wirbelstrom- und auch als Reibungsbremsen.

Es ist eine solche Bremse gemäss dem Oberbegriff des Anspruchs 1 bekannt (NL-A-8 004 035), bei denen die wirksamen Poleisen (Polstücke und segmentförmige Polschuhe) im eingeschalteten Zustand einen geschlossenen viereckigen Querschnitt aufweisen.

Bei einer derartigen Anordnung der wirksamen Poleisen und des umgebenden Dauermagnetmaterials gleicher Polarität treten aber im eingeschalteten Zustand aus den Poleisen Streuflüsse im Bereich der Seitenlinien bzw. an den Enden der Luftspalte auf.

Die Erfindung, wie sie im Anspruch 1 gekennzeichnet ist, löst die Aufgabe, den aus den Poleisen austretenden Streufluss zurückzudrängen.

Die durch die Erfindung erreichten Vorteile sind im wesentlichen darin zu sehen, dass das über die Polstücke und Polschuhe vorstehende Dauermagnetmaterial gleicher Polarität in den Eckbereichen den Streufluss unterbindet und somit entsprechende Induktionsverluste vermieden werden.

Im folgenden werden zwei Ausführungsbeispiele der Erfindung anhand der Zeichnung erläutert.

Es zeigen :

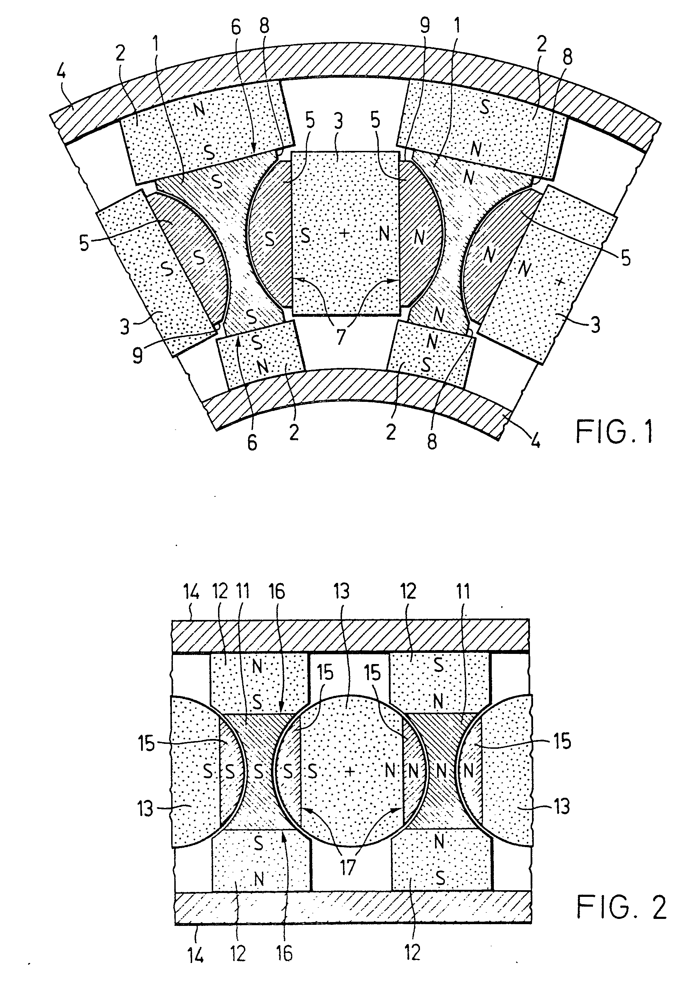

Figuren 1 und 2  je einen Ausschnitt aus einem horizontalen Teilschnitt durch eine Bremse in Aufsicht.

Die in den Figuren dargestellten Ausschnitte aus einer Bremse beziehen sich auf solche Bremsen, wie sie eingehend in den beiden in der Einleitung erwähnten Patentanmeldungen beschrieben sind.

Der grundsätzliche Aufbau wird deshalb als bekannt vorausgesetzt.

Deshalb beschränkt sich die anschliessende Erläuterung auf die erfindungsgemässen Konstruktionsteile.

In Fig. 1 enthält die ringförmig angeordnete Bremse Polstücke 1, angeordnet zwischen zwei Dauermagneten 2, die ihrerseits je an Rückschlussteile 4 anliegen. In die segmentförmigen Aussparungen der Polstücke 1 greifen Dauermagnete 3, bzw. die an diesen befestigten Polschuhe 5 ein. Wie an sich bekannt, sind die Dauermagnete verdrehbar angeordnet und quer zur Drehachse, die senkrecht zur Bremsfläche stehen, magnetisiert. Im dargestellten, eingeschalteten Zustand weisen alle um das wirksame Poleisen, bestehend aus je einem Polstück 1 und den beiden angrenzenden Polschuben 5, angeordneten feststehenden 2 und drehbaren 3 Dauermagnete die gleiche Polarität auf. Die Polarität in den Polstücken 1 und den Polschuhen 5 wird bestimmt von der Polarität derjenigen Dauermagnete, an welche die Flächen 6 der Polstücke 1 bzw. die Flächen 7 der Polschuhe 5 angrenzen.

Wie aus der Zeichnung ersichtlich, weisen daher das wirksame Poleisen und auch die daran angrenzenden Dauermagnete gleiche Pole auf.

Um zu verhindern, dass an den Ecken des wirksamen Poleisens Streuflüsse daraus in den Luftraum austreten, weisen die Polstücke 1 und die Polschube 5 an ihren segmentförmigen Enden Absätze 8 und 9 auf. Damit wird erreicht, dass die angrenzenden Dauermagnete 2 und 3 über die Flächen 6 und 7 der Polstücke 1 und Polschuhe 5 vorstehen. Dies bewirkt die Zurückdrängung des aus dem Weicheisen austretenden Streuflusses, bzw. Streuflussverluste an diesen Stellen werden vermieden.

In Fig. 2 enthält die im Prinzip gleich aufgebaute gradlinige Bremse Polstücke 11, angeordnet zwischen je zwei feststehenden Dauermagneten 12, die wiederum an Rückschlussteile 14 angrenzen. Auch hier weisen verdrehbare Dauermagnete 13 je einen segmentförmigen Polschuh 15 an den beiden Polflächen auf. Wiederum greifen die Polschuhe 15 in gegenüberliegende segmentförmige Ausparungen der Polstücke 11 ein. Die Flächen 16 der Polstücke 11, bzw. die Grenzflächen zwischen den Polstücken 11 und den Dauermagneten 12 sind nun im Querschnitt innerhalb der segmentförmigen Linie angeordnet, sodass Dauermagnetmaterial den Endbereich des Luftspaltes bildet. Entsprechend sind auch Flächen 17, bzw. die Grenzflächen zwischen den verdrehbaren Dauermagneten 13 und den Polschuhen 15 angeordnet. Dadurch wird auch hier das Austreten von Streufluss aus dem Poleisen vermieden.

## Ansprüche

1. Schaltbare, dauermagnetische Bremse mit Polstücken (1 ; 11) wechselnder Polarität, an denen feststehende und verdrehbare Dauermagnete (2 ; 12 und 3 ; 13) angrenzen, wobei die feststehenden Dauermagnete (2 ; 12) mit dem einen Pol an den seitlich gegenüberliegenden Flächen der Polstücke (1 ; 11) und mit dem andern Pol an Rückschlussteilen (4 ; 14) anliegen und die verdrehbaren Dauermagnete (3 ; 13) quer zur Drehachse, die senkrecht zur Bremsfläche stehen, magnetisiert sind und auf ihren Polflächen mit segmentförmigen Polschuhen (5 ; 15), die in gegenüberliegende segmentförmige Aussparungen der Polstücke (1 ; 11) eingreifen, versehen sind wobei in eingeschaltetem Zustand Dauermagnete (2 ; 12 und 3 ; 13) mit jeweils gleicher Polarität Polstücke (1 ; 11) und angrenzende Polschuhe (5 ; 15) umgeben, dadurch gekennzeichnet, dass die feststehenden bzw. verdrehbaren Dauermagnete (2 ; 12 bzw. 3 ; 13) über die Flächen (6 ; 16 bzw. 7 ; 17) der anliegenden Polstücke (1 ; 11) bzw. Polschuhe (5 ; 15) vorstehen.

2. Schaltbare, dauermagnetische Bremse gemäss Anspruch 1, dadurch gekennzeichnet, dass die Polstücke (1) und die Polschuhe (5) an ihren segmentförmigen Enden einen Absatz (8 ; 9) aufweisen.

## Claims

1. Switchable permanent magnetic brake, having pole pieces (1, 11) of alternating polarity adjacent to stationary and rotatable permanent magnets (2, 12 and 3, 13), the stationary permanent magnets (2, 12) being located with one pole thereof at laterally oppositely situated surfaces of the pole pieces (1, 11) and with the other pole at flux return elements (4, 14) each of the rotatable permanent magnets (3, 13) being magnetized transverse to an axis of rotation thereof which is located essentially perpendicular to a braking surface, substantially segment-shaped pole shoes (5, 15) provided at pole surfaces of the rotatable permanent magnets ; each of the pole pieces (1, 11) having substantially segment-shaped recesses located opposite the segment-shaped pole shoes (5, 15) and into which engage related ones of the segment-shaped pole shoes (5, 15), the permanent magnets (2, 12 and 3, 13), in the switched-on state of the brake, surrounding with the same polarity the related pole piece (1, 11) and neighboring pole shoes (5, 15), characterised in that the stationary and rotatable permanent magnets (2, 12) and 3, 13) protruding past surfaces (6, 16 and 7, 17) of the neighboring related pole pieces (1, 11) and pole shoes (5, 15) respectively.

2. Switchable permanent magnetic brake as defined in claim 1, characterised in that the pole pieces (1) and the pole shoes (5) possess respective shoulders (8, 9) at the region of their segment-shaped ends.

## Revendications

1. Frein commutable, à aimantation permanente avec des pièces polaires (1 ; 11) de polarité alternée, auxquelles s'adjoignent des aimants permanents fixes et rotatifs (2 ; 12 et 3 ; 13), les aimants permanents fixes (2 ; 12) s'appliquant par un pôle contre les surfaces latéralement en retard des éléments polaires (1 ; 11) et par l'autre pôle contre les pièces de retour (4 ; 14), et les aimants permanents rotatifs (3 ; 13) sont aimantés transversalement à l'axe de rotation, sont perpendiculaires à la surface de freinage et ont sur leur surface polaire, des patins polaires (5 ; 15) en forme de segments, qui viennent prendre dans des cavités en forme de segments, opposées des pièces polaires (1 ; 11) et à l'état branché des aimants permanents (2 ; 13 et 3 ; 13), sont entourés par des pièces polaires (1 ; 11) de même polarité et des patins polaires (5 ; 15), adjacents, caractérisé en ce que les aimants permanents fixes ou rotatifs (2 ; 12 et 3 ; 13) sont en saillie par rapport aux surfaces (6 ; 16 et 7 ; 17) des pièces polaires adjacentes (1 ; 11) ou des patins polaires (5 ; 15).

2. Frein commutable à aimantation permanente selon la revendication 1, caractérisé en ce que les pièces polaires (1) et les patins polaires (5) présentent au niveau de leur extrémité en forme de segment, un épaulement (8, 9).

0 057 778

FIG.1

FIG. 2

1